# EUROPEAN PATENT SPECIFICATION

(11) **EP 1 764 965 B1**
(45) Date of publication and mention of the grant of the patent: **04.06.2008**
(21) Application number: 07100074.9
(22) Date of filing: 27.02.2004
(51) Int. Cl.: H04L 12/56, H04Q 7/32

(54) **Apparatus and associated method, for facilitating network selection by a mobile node pursuant to a packet data communication service**
Vorrichtung und zugehöriges Verfahren zur Erleichterung der Netzwerkauswahl durch ein mobiles Endgerät für einen Packetdatenkommunikationsdienst
Dispositif et procédé associé pour faciliter la sélection de réseau par un noeud mobile pour un service de communication de données par paquets

(43) Date of publication of application: 21.03.2007
(62) Divisional of application: 04251131.1
(73) Proprietor: Research In Motion Limited, Waterloo, Ontario N2L 3W8 (CA)
(72) Inventor: Buckley, Adrian, Brentwood, 94513 (US); Asthana, Atul, Unionville Ontario L3R 2Y1 (CA); Bumiller, George, Baldwin, Ramsey, NJ 07446 (US); Sundresh, Bokinakere Subbarao, Basingstoke, Hampshire RG22 5UR (GB)
(74) Representative: Fennell, Gareth Charles

(56) References cited:
- EP-A- 0 781 064
- WO-A-01/26409
- WO-A-01/63843
- WO-A-03/045095
- US-A1- 2003 186 695
- O2, T-MOBILE: "Clarification on the use of the RAT during background scanning" 3GPP TSG-CN1 MEETING 32, TDOC N1-031689, [Online] 27 October 2003 (2003-10-27), - 31 October 2003 (2003-10-31) page 1-7, XP002290617 Retrieved from the Internet: URL:http://www.3gpp.org/ftp/tsg_cn/WG1_mm- cc-sm/TSGN1_32/Docs/N1-031689.zip> [retrieved on 2004-07-29]

## Description

The present invention relates generally to a manner by which to select, at a mobile node, a radio access network through which to communicate pursuant to a packet data service. More particularly, the present invention relates to apparatus, and an associated method, that facilitates selection at the mobile node of with which radio access network, if more than one radio access network is available, through which to communicate. Selection is dependent, e.g., on which available radio access network is able to provide packet data connectivity.

A database is created and maintained at the mobile node. The database forms a listing that indexes radio access network identities together with their associated packet data connectivity capabilities. When a mobile node roams beyond its home network, the mobile node detects which radio access networks are available through which to communicate and selects with which of the available radio access networks to communicate responsive to the listing formed of the database. Selection is made at the mobile node. And, dynamic updating of the database content better assures that the mobile node communicates with the radio access network that is best able to provide for packet data communications.

### Background of the Invention

The use of communication systems through which to communicate data pursuant to a communication service is a regular requirement in modem society. Communication data is communicated pursuant to many different types of communication services. And, many varied types of communication systems have been deployed that permit different types of communication data to be communicated. As technological advancements permit, new types of communication systems, permitting effectuation of new types of communication services, shall likely be developed and deployed. Generally, technological advancements provide for the communication of data in more efficient manners, at higher throughput rates, or in manners that better compensate for non-ideal communication conditions.

Many modem communication systems make use of digital communication techniques. The use of digital communication techniques provides various communication advantages. Improved communication efficiencies are possible when digital communication techniques are utilized. And, as a result of the improved efficiencies of communications, data throughput rates possible in a digital communication system are generally greater than data throughput rates possible in corresponding communication systems that utilize analog communication techniques. Additionally, once data is digitized, the data is communicated, if desired, during discrete intervals. Channel sharing is possible, further increasing the efficiencies of communication.

A radio communication system is an exemplary type of communication system. In a radio communication system, radio channels are defined upon radio links extending between communication stations that are parties to a communication session. Data is sent on the radio channels to communicate the data between the communication stations pursuant to a communication service. Many of such radio communication systems make use of digital communication techniques that improve the communication efficiencies of such communication systems. Due to the bandwidth limitations that are regularly associated with bandwidth allocations in many radio communication systems, the improved efficiencies provided through the use of digital communication techniques are particularly advantageously applied therein.

Various advantages are unique to radio communication systems. Because a wireline connection is not required to interconnect the communication stations of a radio communication system, communications are effectuable between communication stations between which wireline connections would be impractical or impossible. And, also because the use of a wireline connection is obviated, a radio communication system is amenable for implementation as a mobile communication system. In a mobile communication system, mobility of communications is provided to one, or more, of the communication stations.

A cellular communication system is a type of radio communication system. A cellular communication system is formed of a network infrastructure that includes a plurality of spaced-apart, fixed-site transceivers, referred to as base transceiver stations, over an area that is encompassed by the communication system. Each base transceiver station defines a coverage area, referred to as a cell. Mobile nodes communicate data by way of radio communication channels extending between a base transceiver station and the mobile node. Due to the spaced-apart positioning of the plurality of base transceiver stations, the power levels at which the data is required to be communicated is relatively low, and the same frequencies are reusable at different base transceiver stations according to a cell reuse pattern. Relatively efficient utilization of the bandwidth allocated to the radio communication system is facilitated. WO 01/26409 A1 (Ericsson) discloses one type of cellular communication system in which a network prepares a capabilities message which is broadcast by a base station to advise mobile user equipment units of services (radio access technology type, generation, radio frequency band) supported by the base station.

Successive generations of cellular communication systems have been developed and the network infrastructures of which have been deployed throughout significant portions of the populated areas of the world. The network infrastructures of more than one generation of cellular communication systems might, for instance, be installed to be operable concurrently with systems of other generations over a common geographic area. And separate networks, operated by separate network operators, of the same generation, might also be installed to be operable over a common geographic area.

Authorization that is granted to a mobile node to communicate with a selected network is based, generally, upon a service subscription purchased by a user of the mobile node. Generally, pursuant to the service subscription, a home network is associated with the mobile node, typically a network that is installed to encompass an area in which the user of the mobile node is anticipated to be positioned most regularly. Due to the inherent mobility of a mobile node, the mobile node might roam, subsequently to be positioned beyond communication range of the home network and within range, instead, of one or more visited networks.

When roaming beyond the home network, the mobile node is able to communicate through one or more of the visited networks, depending, for instance, upon the operating protocols and capabilities of the visited networks and agreements entered into between the operators of the visited networks and the home network. When more than one network is available to a mobile node through which to communicate, a decision is made as to which of the available networks that the mobile node communicates. Conventional mechanisms are used including the use of a defined set of preferred roaming partners. An operator of the home network associated with the mobile node maintains a list of preferred networks that are to be used through which to communicate when the mobile node roams beyond the home network. Historically, the preferred roaming lists are based upon the visiting networks having voice capability, i.e., having the capability of transceiving voice data.

Increasingly, however, cellular communication systems, and mobile nodes operable therein, provide for packet communication services. Many new networks provide for the packet data services while some legacy networks provide only for circuit-switched, voice data communication services. When packet communication services are to be effectuated by a roaming mobile node, selection of the visited network through which to communicate based upon merely the capacity of a visited network to handle voice communications is inadequate to ensure that a packet data communication service shall be acceptably effectuated in such network.

Accordingly, an improved manner by which to select a network through which a roaming mobile node communicates is needed.

It is in light of this background information related to the communication of packet-formatted data in a radio communication system that the significant improvements of the present invention have evolved.

### Summary of the Invention

The present invention, accordingly, advantageously provides apparatus, and an associated method, by which to select, at a mobile node, a radio access network through which to communicate pursuant to a packet data service.

Through operation of an embodiment of the present invention, a manner is provided by which to facilitate selection at the mobile node of with which radio access network through which the mobile node communicates when the mobile node roams beyond its home network.

In one aspect of the present invention, a method in a mobile node is provided. The mobile node is capable of packet data communication with a network part. Selection is made of a radio access network of a plurality of radio access networks in the radio part. The mobile node stores values defining a database in a storage element. The database forms a listing that identifies available radio access networks of the plurality of radio access networks together with an indication associated therewith of radio access network capability to provide packet data communication with the mobile node.

In another aspect of the present invention, detection is made of messages received from the available radio access networks. The messages have values identifying the radio access network capabilities of the corresponding available radio access networks. The indication of any radio access network capability of any of the available radio access networks of the listing is altered when a message is of values that identify the radio access network capabilities to be different from those identified in the listing. A radio access network is selected from the available radio access networks based upon the listing, as altered.

The mobile node monitors messages broadcast upon broadcast channels by base transceiver stations of different networks. Monitoring of the broadcast of the messages permits the mobile node to identify which networks are available for communications as well as, also, to determine whether the networks provide specific capabilities. That is to say, the message is broadcast by separate radio access networks, identify the networks and also indicate the network's capabilities. The values stored at the database are updated with current information regarding the capabilities of the networks, thereby dynamically to maintain a current status of the network capabilities. If, for instance, the data contained in the message detected by the mobile node during its monitoring of the broadcasts indicates that a network exhibits capabilities corresponding to capabilities already recorded at the database, the database entry is affirmed. Conversely, for instance, if the message detected by the mobile node indicates a network capability that differs with that indicated in the database listing, the database listing is modified, at least to indicate the present, indicated capability. And, if the message identifies a network that does not have a corresponding database listing, the database is updated to include a listing of the network together with its communication capability, also indicated in the message. Thereby, the information contained at the database is best able to be maintained to correctly identify most-current communication capabilities of the various radio access networks into whose area of coverage that the mobile node might roam.

In another aspect of the present invention, the database is first populated with values forming a database that defines a listing of an initial set of radio access network identities together with their corresponding communication capabilities. The initial set is modified, as needed, during operation of the mobile node to monitor and detect messages broadcast by various radio access networks.

When, for instance, the radio communication system is constructed pursuant to the operating specification of a GSM (Global System for Mobile communications), messages broadcast by radio access networks identify the mobile country code (MCC) and mobile network code (MNC) that together identify the radio access network that broadcasts the message.

In another aspect of the present invention, the mobile node also includes a selector that selects with which network through which the mobile node shall communicate pursuant to a packet data service. The selector utilizes, in the selection, indications of which radio access networks are available and, of the available networks, which exhibit communication capabilities best to facilitate effectuation of the packet communication service.

Because the selection of the network with which the mobile node communicates is based upon dynamically-maintained information and also based, at least in part, upon the communication capabilities of the available networks, improved selection is provided.

In these and other aspects, therefore, apparatus, and an associated method, is provided for a radio communication system. The radio communication system has a mobile node that is selectably operable at least to communicate packet data with a network part. The network part is formed of a plurality of network portions. A first network portion of the plurality forms a home network associated with the mobile node. Selection of with which network portion of the plurality of network portions that the mobile node communicates is facilitated. A storage element is embodied at the mobile node. The storage element stores values that define a database. The database forms a listing identifying at least selected ones of the plurality of network portions together with an indication associated therewith of network portion capability to provide packet data connectivity with the mobile node to communicate packet data therewith. A selector is adapted to access the database defined at the storage element. The selector selects through which of the network portions of the plurality of network portions to communicate the packet data. Selection that is made by the selector is, at least in part, dependent upon the listing formed of the database defined at the storage element.

A more complete appreciation of the present invention and the scope thereof can be obtained from the accompanying drawings that are briefly summarized below, the following detailed description of the presently-preferred embodiments of the present invention, and the appended claims.

### Brief Description of the Drawings

Figure 1 illustrates a functional block diagram of a radio communication system in which an embodiment of the present invention is operable.
Figure 2 illustrates a message sequence diagram representing signaling generated during operation of the radio communication system shown in Figure 1.
Figure 3 illustrates a representation of an exemplary database formed pursuant to an embodiment of the present invention.
Figure 4 illustrates a representation of another exemplary database formed pursuant to an embodiment of the present invention.
Figure 5 illustrates a flow chart representative of exemplary operation of an embodiment of the present invention.
Figure 6 illustrates another exemplary flow chart, also representative of exemplary operation of an embodiment of the present invention.
Figure 7 illustrates another flow chart also representative of operation of an embodiment of the present invention.
Figure 8 illustrates another flow chart, also exemplary of operation of an embodiment of the present invention.

### Detailed Description

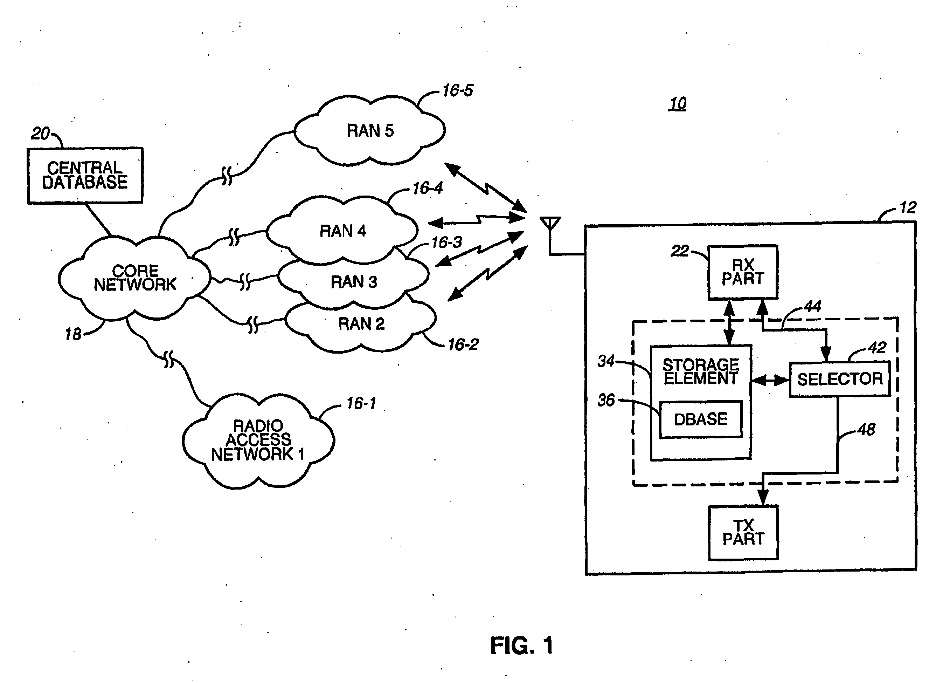

Referring first to Figure 1, a radio communication system, shown generally at 10, provides for radio communications with mobile nodes, of which the mobile node 12 is representative. The mobile node operates, selectably, to provide packet communication services and circuit-switched, e.g., voice communication services.

In the exemplary implementation, the mobile node operates at least to communicate pursuant to the operating standards and protocols of a GSM (Global System for Mobile communications) cellular communication system. In one implementation, the mobile node further forms a multi-node device, capable of communicating pursuant to two or more cellular, or other, communication standards. While the following description shall describe exemplary operation of the radio communication system in which the mobile node operates pursuant to the GSM operating protocols, in other implementations, the mobile node operates in other manners. Operation of an embodiment of the present invention is analogously implementable in other manners, pursuant to operating protocols other than the GSM operating protocols. And, analogous description of operation of the mobile node, and the radio communication system, can analogously be described with respect to its implementation in such other communication systems.

The communication system includes a network part, here having a plurality of radio access networks 16. Five radio access networks (RANs) are represented in the figure. One of the radio access networks, here radio access network 16-1, forms a home network associated with the mobile node 12. And, when the mobile node is positioned within the coverage area of its home network, communications by the mobile node are generally effectuated with the home network.

However, due to the inherent mobility of the mobile node, the mobile node is movable to be positioned at a location beyond the coverage area of the home network and in the coverage area of another network.

Others of the radio access networks are identified as 16-2, 16-3, 16-4, and 16-5. The radio access networks 16-2, 16-3, and 16-4 partially overlay one another and are representative of networks, operated by separate network operators, that are of at least partially overlapping coverage areas. And, the radio access network 16-5 is representative of another network into whose coverage area that the mobile node might roam during roaming operation beyond its home network. The separate radio access networks are suitably intercoupled, such as by way of a core network 18, or other appropriate mechanism, e.g., more than one core network, through which communication paths are formable. A central database 20 is connected to the network 18, or is otherwise accessible by way of the radio access networks 16.

The mobile node includes transceiver circuitry, here including a receiver part 22 and a transmit part 24 that are operable to receive data communicated thereto on downlink channels defined upon radio air interface and to transmit data upon uplink channels to a radio access network through which the mobile node is communicating. When the mobile node roams beyond the coverage area of the home network, the mobile node must communicate by way of another radio access network. While conventional schemes have been utilized by which to select through which radio access network that communications are to be effectuated, the conventional schemes generally rely on the use of preferred roaming lists or otherwise do not take into account the packet communication capabilities of the radio access network.

The mobile node includes apparatus 32 of an embodiment of the present invention. The apparatus facilitates selection by the mobile node of a radio access network through which to communicate when the mobile node roams beyond the home network coverage area, or otherwise does not communicate by way of its home network.

The apparatus includes a storage element 34. The storage element that defines a database 36 that forms a listing identifying radio access networks together with their respective communication capabilities. And, the apparatus includes a selector 42 that has access to the database defined at the storage element. The selector is also coupled, here represented by way of the line 44, to the receive part to receive indications of with which radio access networks broadcast messages that are detected at the mobile node. Indications of such messages are also provided to the storage element. The selector operates to select with which of the available radio access networks that the mobile node shall communicate. Indications provided to the selector on the line 44 inform the selector of which radio access networks are potential networks through which the mobile node might be able to communicate. And, access is made to the listings contained in the database to determine if the communication capability of the available radio access networks correspond to the requirements of the mobile node.

Here, when the mobile node provides, or is to provide a packet communication service, the capacity of the radio access network to provide packet communication connectivity is a significant selection criteria. Responsive to the accessed information, the selector makes selection of the radio access network with which the mobile node shall communicate and identifies the selection to the transmit part of the mobile node, here represented by way of the line 48. And, connection procedures are commenced to communicate by way of the selected radio access network.

For instance, when the mobile node roams beyond the coverage area of its home network 16-1 and into the coverage areas of the networks 16-2, 16-3, and 16-4, the mobile node receives indications of its presence in the coverage areas of the three networks. Indications are provided by way of the line 44 to the selector of the three networks 16-2, 16-3, and 16-4. The selector accesses listings in the database 36 of the identities of the corresponding networks. And, the network capabilities of the network listings are identified. Responsive to the accessed information, the selector makes selection of with which of the networks through which the mobile node shall communicate. Additionally, when the mobile node is not currently a party to a communication session or in which a communication session is not immediately anticipated, indications of the messages broadcast by the networks are monitored and used to update the contents of the database 36. Current information relating to the communication capabilities of the networks listed in the database is thereby better assured.

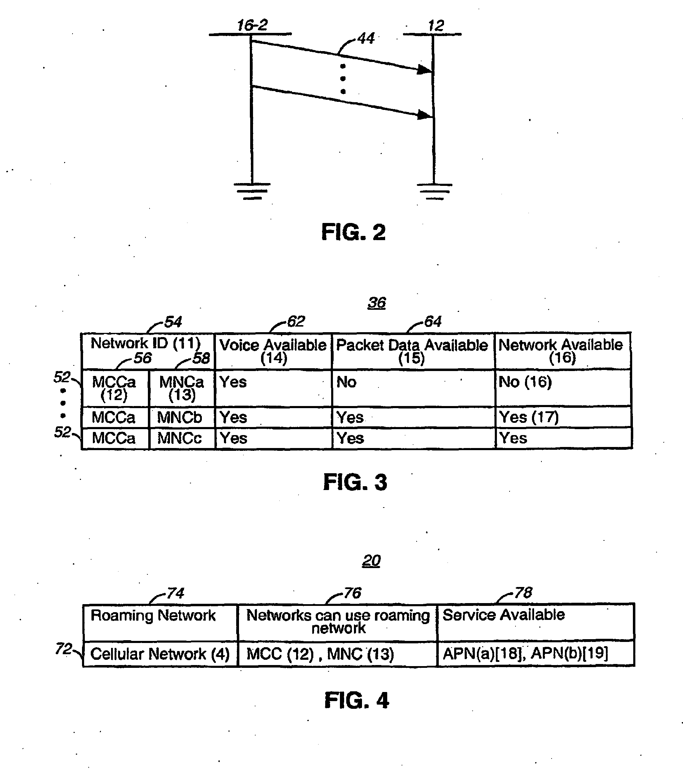

Figure 2 illustrates a message sequence diagram, shown generally at 62, representative of the broadcast of messages by a radio access network, such as the radio access network 16-2, during operation of the radio communication system 10 shown in Figure 1. Here, messages are generated at the radio access network and broadcast, indicated by the segments 44 and delivered to the mobile node 12. In the exemplary implementation in which the radio access network that broadcasts the messages is constructed generally in conformity with the GSM operating specification and provides for GPRS (General Packet Radio Service), the message is broadcast by the network form system information type 3 SI 3 rest octets that are coded to indicate GPRS capability. Messages broadcast by networks operable pursuant to other operating specifications, such as an IS-95 compliant CDMA operating specification or a UMTS operating specification are structured analogously to the messages generated by a GSM/GPRS network.

Also, when the message is broadcast by a GSM/GPRS-compliant, a mobile country code (MCC) and a mobile network code (MNC) identifies the network. Values representative of the country code and network code are contained in the messages broadcast by the network.

As network upgrades are implemented at the radio access networks to improve their communication capabilities, the messages broadcast by such networks indicate the improved capability by identifying the communication capabilities of such networks. For instance, EDGE (Enhanced Data for GSM Evolution) capabilities are implementable to upgrade GSM/GPRS networks. MSS, MMBS, and IM communication capabilities represent analogous communication upgrades.

Figure 3 illustrates a representation of an exemplary database 36 embodied at the mobile node 12 (shown in Figure 1) pursuant to an embodiment of the present invention. The database forms a plurality of listings 52 each identifying a separate network by a network identifier 54. In the exemplary implementation in which the mobile node forms a GSM/GPRS compliant device, the network identifier is formed of a mobile country code 56 and a mobile network code 58. Communication capabilities of the listed network are identified in the columns 62 and 64, here indicating whether voice services are available and packet data services are available, respectively.

In one implementation, the database is initially provisioned with values forming an initial database containing listings of selected radio access networks. GSM/GPRS/UMTS are identified by their mobile country codes and mobile network codes. Indexed together therewith are the services available, i.e., the communication capabilities, and the known APNs that are reachable by way of the associated network.

Subsequent to selection, the mobile node registers and authenticates itself with the selected network. Then, the mobile node requests and obtains a packet data service. Thereafter, the mobile node communicates with the central database 20. The database 20 is provided with the home network details of the home network of the mobile node and indicates which network in which the mobile node is registered, i.e., the selected network, together with an indication of what services are requested. The information is stored at the database 20. If another user from the same home network has already registered by way of the selected visited network, then only the services available by way of this selected network shall be updated, if required. Dynamic updating of the database categories is also permitted as incompatibilities between different implementations of a particular service are identified and as new generations of mobile networks are developed.

Figure 4 illustrates a representation of an exemplary database 20. A listing 72 contains an identity of the network 74, a roaming network indication 76, and an indication of the services available in the network in the column 78. Additional columns, for reasons just-noted, are added, as needed.

And, with respect to the database 36, the initial provisioning, in one implementation, forms an exact copy of the network database 20. In another implementation, the database 36 is initially provisioned with an abridged or compressed copy of the database 20. And, in one implementation, the database 36 is embodied on a portable memory card, such as a subscriber identity module (SIM) or the like. Analogous information is stored at the database if the mobile node is WLAN (Wireless Local Area Network) capable.

Maintenance of the central database 20 and dissemination of information stored thereat is preferably effectuated without undue increase in network traffic load, while, also, maintaining the database with up-to-date information. In one implementation, a multi-level distribution approach is utilized. The approach makes use of the roaming history of the mobile node, e.g., the countries in which the mobile node has been operated and the frequency of non-home network operation, planned roaming operation of the mobile node, e.g., identification of the countries and dates, etc.

Any of various loading and database updating procedures are carried out. For instance, the initial provisioning is performed in advance of use of the mobile node. Provisioning of a full or restricted set of central database information, depending upon the frequency bands and technologies pursuant to which the mobile node is operable. If a restricted set of data is initially provisioned, provisioning of information related to additional countries is subsequently loadable at the database. And, pursuant to anticipated trips, the database is selectively further provisioned. In one implementation, loading of data based on a specific user request triggers a local check by the mobile node, indicating any potential absence of networks in the selected countries, based on the desired APN and the home network operator associated with the mobile node. Updating of the databases with significant database changes, when the changes occur, is also permitted. For instance, such changes include addition of a first network in a selected country that has the desired APN or of potential elimination of the only network with the APN, based on the home network operator of the mobile node.

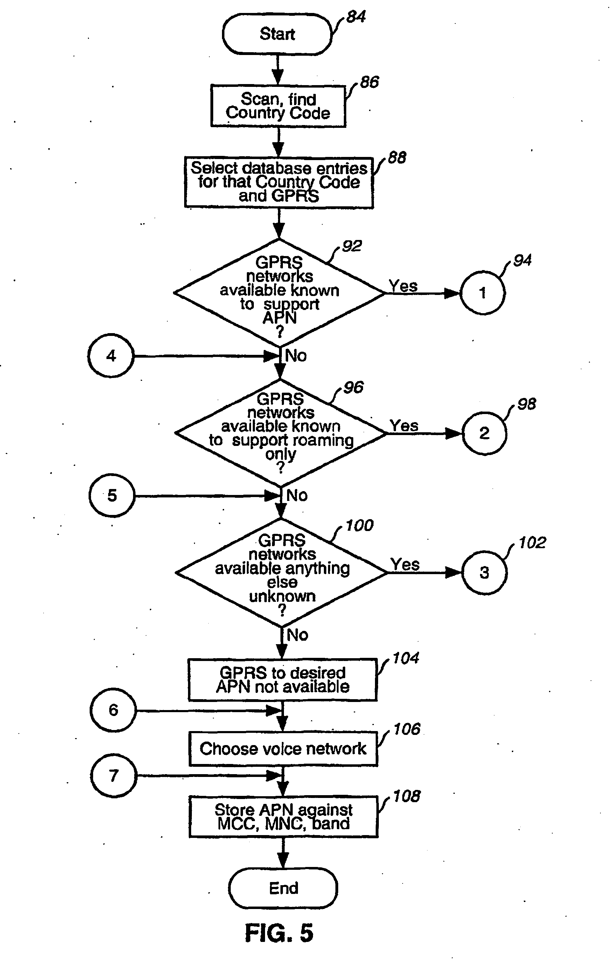

Figure 5 illustrates a flow chart, shown generally at 82, representative of operation of an embodiment of the present invention. Operations commence with the start block 84. First, and as indicated by the block 86, the mobile node scans selected channels and finds a country code identifying the country of the mobile node's location. Then, and as indicated by the block 88, database entries are selected for the identified country code that provide appropriate communication capabilities, here GPRS.

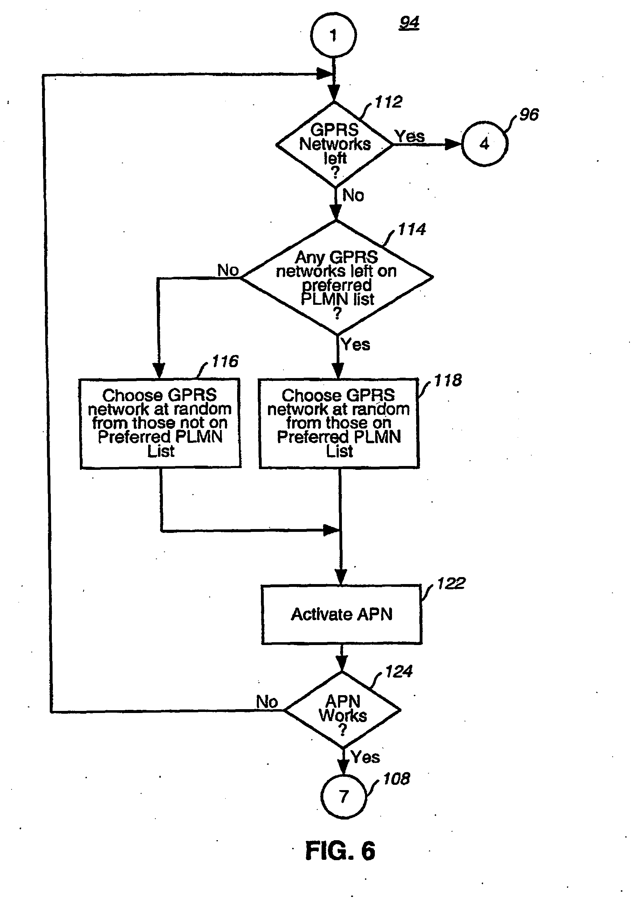

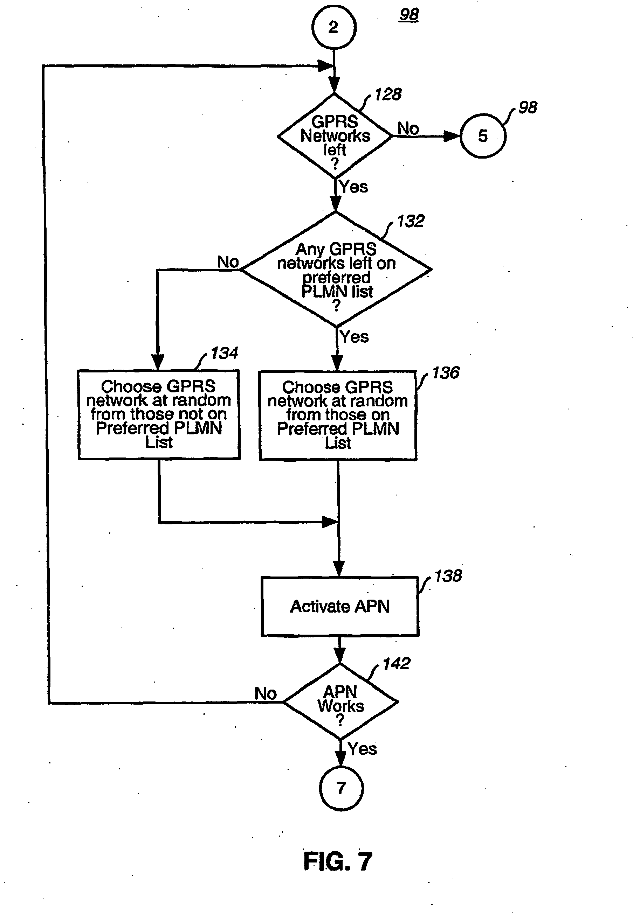

Thereafter, and as indicated by the decision block 92, a determination is made as to whether GSM networks are available that are known to support the APN. If so, a yes branch is taken to a flow chart 94, described below with respect to Figure 6. Otherwise, the no branch is taken to the decision block 96. At the decision block 96, a determination is made as to whether GPRS networks are available, known to support roaming only. If so, the yes branch is taken to the flow chart 98, described below with respect to Figure 7. Otherwise, the no branch is taken to the decision block 100.

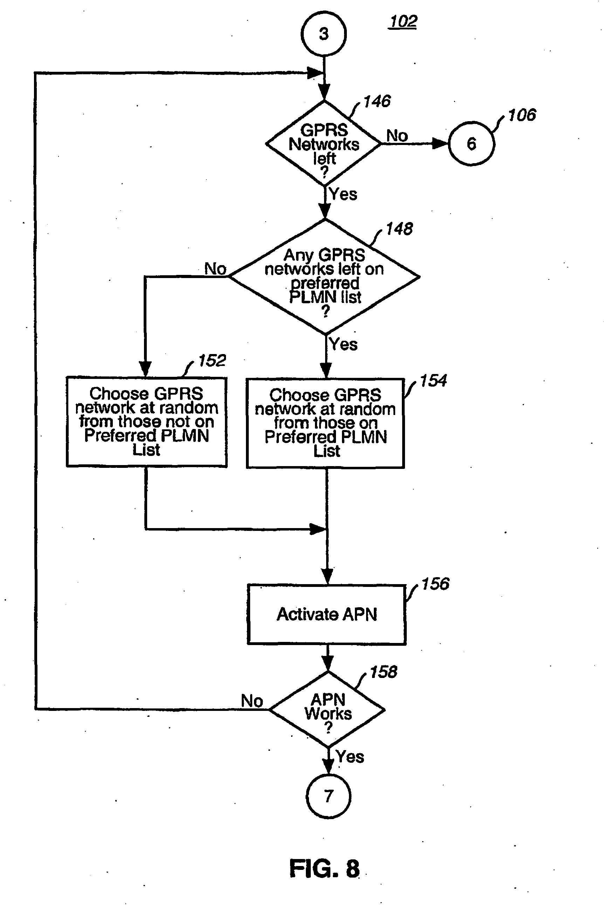

At the decision block 100, a determination is made as to whether GPRS networks are available and if anything else is unknown. If yes, the yes branch is taken to the flow chart 102, described below with respect to Figure 8. Otherwise, the no branch is taken to the block 104. And, as indicated, GPRS to the desired APN is unavailable. Then, and as indicated by the block 106, a voice network is chosen. And, as indicated by the block 108, the APN is stored at the database indexed together with a network identifier.

Figure 6 illustrates the flow chart 94. First, a determination is made, indicated by the decision block 112, as to whether any GPRS networks are left. If so, the yes branch is taken back to the decision block 96, shown in Figure 5. Otherwise, the no branch is taken to the decision block 114. At the decision block 114, a determination is made as to whether any GPRS networks are left on the preferred PLMN list. If not, the no branch is taken to the block 116 and a GPRS network is chosen at random from those not on a preferred PLMN list. Conversely, the yes branch is taken to the block 118. At the block 118, the GPRS is chosen at random from those on the preferred PLMN list. Branches are taken from both of the blocks 116 and 118 to the block 122 whereat the APN is activated. Thereafter, a branch is taken to the decision block 124. At the decision block 124, a determination is made as to whether the APN is working. If not, the no branch is taken back to the decision block 112. Otherwise, the yes branch is taken back to the block 108, shown in Figure 5.

Figure 7 illustrates the flow chart 98. The flow chart commences when the yes branch is taken from the decision block 96, shown in Figure 5. First, and as indicated by the decision block 128, a determination is made as to whether any GPRS networks remain. If not, the no branch is taken back to the decision block 98, shown in Figure 5. Otherwise, the yes branch is taken to the decision block 132. At the decision block 132, a determination is made as to whether any of the remaining GPRS networks are on the preferred PLMN list. If not, the no branch is taken to the block 134. At the block 134, the GPRS network is chosen at random from those not on the preferred PLMN list. Conversely, if the yes branch is taken from the decision block, the GPRS network is chosen at random, indicated by the block 136, from those on the preferred PLMN list.

Branches from the blocks 134 and 136 extend to the block 138 whereat the APN is activated. Then, and as indicated by the decision block 142, a determination is made as to whether the APN is working. If not, the no branch is taken back to the decision block 128. Otherwise, the yes branch is taken back to the block 108, shown in Figure 5.

Figure 8 illustrates the flow chart 102. The flow chart 102 commences when the yes branch is taken from the decision block 100, shown in Figure 5.

First, and as indicated by the decision block 146, a determination is made as to whether a GPRS network remains. If not, the no branch is taken back to the block 106, shown in Figure 5. Otherwise, the yes branch is taken to the decision block 148 whereat a determination is made as to whether any GPRS networks remain on the preferred PLMN list. If not, the no branch is taken to the block 152 whereat the GPRS network is chosen at random from those not on the preferred PLMN list. Otherwise, the yes branch is taken to the block 154 whereat the GPRS network is chosen at random from those on the preferred PLMN list.

Branches taken from the blocks 152 and 154 extend to the block 156 whereat the APN is activated. Then a branch is taken to the decision block 158 whereat a determination is made as to whether the APN is working. If not, the no branch is taken back to the block 146. Otherwise, the yes branch is taken to the block 108, shown in Figure 5.

The previous descriptions are of preferred examples for implementing the invention, and the scope of the invention should not necessarily be limited by this description. The scope of the present invention is defined by the following claims.

## Claims

1. A method in a mobile node (12), capable of packet data communication with a network part, for selecting a radio access network of a plurality of radio access networks (16-1, 16-2, 16-3, 16-4, and 16-5) in the network part, the mobile node storing values defining a database (36) in a storage element (34), the database forming a listing identifying available radio access networks (16-2, 16-3, 16-4, and 16-5) of the plurality of radio access networks together with an indication associated therewith of radio access network capability to provide packet data communication with the mobile node, the method being **characterized by**:
detecting messages received from the available radio access networks, the messages having values identifying the radio access network capabilities of the corresponding available radio access networks;
altering the indication of any radio access network capability of any of the available radio access networks of the listing when a message is of values identifying the radio access network capabilities to be different from identified in the listing; and,
selecting a radio access network from the available radio access networks for packet data communication based upon the listing formed of the database defined during said operation of altering.

2. The method of claim 1, wherein the operation of detecting messages is further performed subsequent to the operation of storing and wherein the operations of receiving and storing are iteratively performed.

3. A mobile node (12) capable of packet data communication with a network part configured to select a radio access network of a plurality of radio access networks (16-1, 16-2, 16-3, 16-4, and 16-5) in the network part, the mobile node configured to store values defining a database (36) in a storage element (34), the database forming a listing identifying available radio access networks (16-2, 16-3, 16-4, and 16-5) of the plurality of radio access networks together with an indication associated therewith of radio access network capability to provide packet data communication with the mobile node, the mobile node being **characterized by**:
a detector (22) coupled to the storage element (34), the detector (22) configured to receive messages from the available radio access networks, the messages having values identifying the radio access network capabilities of the corresponding available radio access networks, the detector (22) further configured to alter the indication of any radio access network capability of any of the available radio access networks of the listing when a message is of values identifying the radio access network capabilities to be different from identified in the listing; and,
a selector (42) coupled to the detector (22) and the storage element (34), the selector (42) configured to select a radio access network from the available radio access networks for packet data communication based upon the listing formed of the database defined in the storage element (34) and the alteration made by the detector.

## Patentansprüche

1. Ein Verfahren in einem mobilen Knoten (12), welcher zu Packet-Daten-Kommunikation mit einem Netzwerkteil befähigt ist, zur Auswahl eines Funk-Zugangs-Netzwerks aus einer Vielzahl von Funk-Zugangs-Netzwerken (16-1, 16-2, 16-3, 16-4, und 16-5) in dem Netzwerkteil, wobei der mobile Knoten Werte, welche eine Datenbasis (36) definieren, in einem Speicher-Element (34) speichert, wobei die Datenbasis eine Liste bildet, welche verfügbare Funk-Zugangs-Netzwerke (16-2, 16-3, 16-4, und 16-5) aus der Vielzahl von Radio-Zugangs-Netzwerken zusammen mit einer damit assoziierten Angabe über die Funk-Zugangs-Netzwerk-Fähigkeit, um Packet-Daten-Kommunikation mit dem mobilen Knoten bereitzustellen, identifiziert, wobei das Verfahren **gekennzeichnet ist durch**
Erkennen von Nachrichten, welche von den verfügbaren Funk-Zugangs-Netzwerken empfangen wurden, wobei die Nachrichten Werte haben, welche die Funk-Zugangs-Netzwerk-Fähigkeiten der korrespondierenden verfügbaren Funk-Zugangs-Netzwerke identifizieren;
Ändern der Angabe von Funk-Zugangs-Netzwerk-Fähigkeiten von verfügbaren Funk-Zugangs-Netzwerken von der Liste, wenn eine Nachricht Werte hat, welche die Funk-Zugangs-Netzwerk-Fähigkeiten als verschieden von den in der Liste identifizierten identifiziert; und,
Auswählen eines Funk-Zugangs-Netzwerks aus den verfügbaren Funk-Zugangs-Netzwerken zur Packet-Daten-Kommunikation basierend auf der Liste gebildet aus der Datenbasis, welche **durch** den besagten Änderungsschritt definiert wird.

2. Das Verfahren gemäß Anspruch 1, wobei der Schritt des Erkennens von Nachrichten weiter durchgeführt wird im Anschluss zum Schritt des Speicherns und wobei die Schritte des Empfangens und Speicherns iterativ durchgeführt werden.

3. Ein mobiler Knoten (12), welcher zur Packet-Daten-Kommunikation mit einem Netzwerkteil befähigt ist, konfiguriert zur Auswahl eines Funk-Zugangs-Netzwerks aus einer Vielzahl von Funk-Zugangs-Netzwerken (16-1, 16-2, 16-3, 16-4, und 16-5) in dem Netzwerkteil, wobei der mobile Knoten konfiguriert ist, Werte, welche eine Datenbasis (36) definieren, in einem Speicher-Element (34) zu speichern, wobei die Datenbasis eine Liste bildet, welche verfügbare Funk-Zugangs-Netzwerke (16-2, 16-3, 16-4, und 16-5) aus der Vielzahl von Radio-Zugangs-Netzwerken zusammen mit einer damit assoziierten Angabe über die Funk-Zugangs-Netzwerk-Fähigkeit, Packet-Daten-Kommunikation mit dem mobilen Knoten bereitzustellen, identifiziert, wobei der mobile Konten **gekennzeichnet ist durch**
einen Detektor (22), verbunden mit dem Speicher-Element (34), wobei der Detektor (22) konfiguriert ist zum Empfangen von Nachrichten von den verfügbaren Funk-Zugangs-Netzwerken, wobei die Nachrichten Werte haben, welche die Funk-Zugangs-Netzwerk-Fähigkeiten der korrespondierenden verfügbaren Funk-Zugangs-Netzwerke identifizieren, wobei der Detektor (22) weiter konfiguriert ist zum Ändern der Angabe von Funk-Zugangs-Netzwerk-Fähigkeiten von verfügbaren Funk-Zugangs-Netzwerken von der Liste, wenn eine Nachricht Werte hat, welche die Funk-Zugangs-Netzwerk-Fähigkeiten als verschieden von den in der Liste identifizierten identifiziert; und,
eine Auswahlvorrichtung (42) verbunden mit dem Detektor (22) und dem Speicher-Element (34), wobei die Auswahlvorrichtung (42) konfiguriert ist zum Auswählen eines Funk-Zugangs-Netzwerks aus den verfügbaren Funk-Zugangs-Netzwerken zur Packet-Daten-Kommunikation basierend auf der Liste gebildet aus der Datenbasis, welche in dem Speicher-Element (32) und den vom Detektor gemachten Änderungen definiert ist.

## Revendications

1. Procédé, dans un noeud mobile (12) capable de communiquer des données en paquets avec une partie de réseau, de sélection d'un réseau d'accès radio parmi une pluralité de réseaux d'accès radio (16-1, 16-2, 16-3, 16-4 et 16-5) dans la partie de réseau, le noeud mobile mémorisant des valeurs formant une base de données (36) dans un élément de stockage (34), la base de données formant une liste identifiant des réseaux d'accès radio disponibles (16-2, 16-3, 16-4 et 16-5) dans la pluralité de réseaux d'accès radio, avec une indication associée à ceux-ci de la capacité du réseau d'accès radio à fournir une communication de données en paquets avec le noeud mobile, le procédé étant **caractérisé par** les étapes consistant à :
détecter des messages reçus des réseaux d'accès radio disponibles, les messages ayant des valeurs qui identifient les capacités de réseau d'accès radio des réseaux d'accès radio disponibles correspondants ;
modifier l'indication d'une capacité quelconque de réseau d'accès radio de l'un quelconque des réseaux d'accès radio disponibles dans la liste lorsqu'un message a des valeurs identifiant les capacités de réseau d'accès radio qui sont différentes de celles identifiées dans la liste ; et
sélectionner un réseau d'accès radio parmi les réseaux d'accès radio disponibles pour la communication de données en paquets sur la base de la liste formée de la base de données définie pendant ladite étape de modification.

2. Procédé selon la revendication 1, dans lequel l'étape de détection des messages est en outre exécutée après l'étape de mémorisation, et dans lequel les étapes de réception et de mémorisation sont exécutées itérativement.

3. Noeud mobile (12) capable de communiquer des données en paquets avec une partie de réseau, configuré pour sélectionner un réseau d'accès radio parmi une pluralité de réseaux d'accès radio (16-1, 16-2, 16-3, 16-4 et 16-5) dans la partie de réseau, le noeud mobile étant configuré pour mémoriser des valeurs formant une base de données (36) dans un élément de stockage (34), la base de données formant une liste identifiant des réseaux d'accès radio disponibles (16-2, 16-3, 16-4 et 16-5) dans la pluralité de réseaux d'accès radio, avec une indication associée à ceux-ci de la capacité du réseau d'accès radio à fournir une communication de données en paquets avec le noeud mobile, le noeud mobile étant **caractérisé par** :
un détecteur (22) couplé à l'élément de stockage (34), le détecteur (22) étant configuré pour recevoir des messages provenant des réseaux d'accès radio disponibles, les messages ayant des valeurs qui identifient les capacités de réseau d'accès radio des réseaux d'accès radio disponibles correspondants, le détecteur (22) étant en outre configuré pour modifier l'indication d'une capacité quelconque de réseau d'accès radio de l'un quelconque des réseaux d'accès radio disponibles dans la liste lorsqu'un message a des valeurs identifiant les capacités de réseau d'accès radio qui sont différentes de celles identifiées dans la liste ; et
un sélecteur (42) couplé au détecteur (22) et à l'élément de stockage (34), le sélecteur (42) étant configuré pour sélectionner un réseau d'accès radio parmi les réseaux d'accès radio disponibles pour la communication de données en paquets sur la base de la liste formée de la base de données définie dans l'élément de stockage (34) et de la modification opérée par le détecteur.
